# EUROPEAN PATENT APPLICATION

(11) **EP 2 449 875 A1**
(43) Date of publication of application: **09.05.2012**
(21) Application number: 10794427.4
(22) Date of filing: 27.05.2010
(51) Int. Cl.: A01G 7/02, B01F 3/04

(54) **METHOD FOR PRODUCING A NUTRIENT SOLUTION FOR WATERING AND/OR FEEDING CULTIVATED PLANTS**

(30) Priority: 29.06.2009 RU 2009124505
(71) Applicant: Nizienko, Yuri Konstantinovich, Moskovskaya obl., 142190 (RU); Belilovsky, Viktor Abramovich, Moscow 123317 (RU)
(72) Inventor: Nizienko, Yuri Konstantinovich, Moskovskaya obl., 142190 (RU); Belilovsky, Viktor Abramovich, Moscow 123317 (RU)
(74) Representative: Michalski, Stefan
(86) International application number: PCT/RU2010/000272
(87) International publication number: WO 2011/002336

(57) **Abstract**

The invention is related to agriculture, in particular to the setup of greenhouse centers for cultivating vegetables and flowers, for example, in raised beds, but it can also be used for cultivating plants on open land. The claimed method involves the dissolution (in saturator 1) of CO₂ from compressed air in water with formation of chemical bonds, and then the resulting volume of nutrient solution from saturator 1 is used for watering the plants (in particular, through a watering-and-feeding irrigation system). The purified carbon dioxide gas is extracted from atmospheric air by pumping it into saturator 1 with the help of, for instance, compressor 3. The volume of saturator 1 is first (before the air is pumped in) is filled with water so that an air pocket - cavity 6 - can form. The air is then pumped into saturator 1 until the pressure in cavity 6 exceeds atmospheric pressure. After that, using pressure relief valve 8, air depleted of CO₂ by partial dissolution in water is emitted from the aforesaid cavity 6 into the atmosphere while compressed air from compressor 3 is pumped through at the same time. Thus the air pressure created previously in cavity 6 is maintained until a nutrient solution with the necessary concentration of dissolved carbon dioxide gas is obtained. The optimum air pressure to be maintained in cavity 6 of saturator 1 is preferably within the range of 5 to 10 atmospheres. It is practical to supply the air into saturator 1 through the bottom part of saturator 1 under pressure sufficient to force it into air cavity 6 of saturator 1 through the volume of the water column. To produce the nutrient solution, it is advisable to use water that is free of contaminants, preferably distilled or filtered through a membrane by reverse osmosis. As a rule, the saturator's volume is pre-filled with water chilled to a temperature below ambient. 1 independent claim and 4 subclaims, 1 illustration

## Description

The invention is related to agriculture, in particular to the setup of greenhouse centers for cultivating vegetables and flowers, primarily in raised beds, but it can also be used for cultivating plants on open land.

An urgent issue today for vegetable and flower growers is using pure carbon dioxide for supplementary feeding of plants, for example, in raised beds. The low content of CO₂ absorbed by the plants during photosynthesis is, at the current stage of development of greenhouse facilities, one of the key factors limiting crop yield. For instance, during the spring and summer period, CO₂ consumption by cucumber plants can approach 50 kg per hour per 1 ha (i.e. about 700 kg/ha per light day). The resulting CO₂ consumption deficit is only partially compensated by the inflow of ambient air through the greenhouse vents as well as by the night-time breathing of the plants. All of this makes supplementary feeding of the plants by pure carbon dioxide necessary, using economical methods and means.

For raised-bed greenhouses, the additional source of carbon dioxide is the soil mixed with manure, peat, straw or sawdust. The air enrichment effect inside the greenhouse with pure carbon dioxide depends on the quantity and type of these organic products undergoing microbiological decomposition. For example, when sawdust wetted with mineral fertilizers is added, during the initial period the carbon dioxide levels can reach high values during the night and day with vents closed. However, on the whole this effect is not great enough, satisfying only a part of the plants' requirements. The main shortcoming of biological sources of carbon is the short duration of the increase in carbon dioxide concentration to the necessary level, as well as the inability to regulate the feeding process, either with regard to concentration, or the timing period. It often happens at in-ground greenhouses that, on sunny days and with insufficient ventilation, the concentration of CO₂ (as a result of intensified absorption of carbon dioxide by the plants during the photosynthesis process) can drop to 0.01%, so that the photosynthesis practically stops. Thus, the shortage of CO₂ becomes one of the principal factors limiting the assimilation of carbohydrates and, consequently, the growth and development of plants. The deficit of CO₂ can be fully compensated only by using additional technical means and methods, i.e. technologically feasible sources of carbon dioxide.

In prior art, there is a known method (Method A) of feeding plants by artificially increasing the concentration of carbon dioxide they absorb during photosynthesis. In accordance with this method, liquid carbon dioxide is converted in a gasifier (evaporator) into preheated carbon dioxide (CO₂), which is fed under pressure into the main pipeline. Then the gas from the main pipeline, through a special device, is fed to the greenhouse through distribution pipelines. The gas is delivered to the plants through perforated polymer sleeves branching from the gas distribution pipeline. Each sleeve has a double seam on the side by which it can be suspended at any level.

If the carbon-dioxide plant has been designed without a liquefaction unit and a storage tank, then at night time and on overcast days the carbon dioxide will have to be bled off into the atmosphere, or else the station will have to be turned off regularly, which will reduce its service life.

There is also a known method in prior art (Method B) of obtaining a nutrient solution for watering/feeding cultivated plants in raised beds, which includes the dissolution of purified carbon dioxide gas in water with formation of chemical bonds (hydration) under pressure in a saturator, with subsequent delivery of the resulting volume of nutrient solution from the saturator to a hermetically sealed storage tank of the watering-and-feeding irrigation system.

Distribution of irrigation water (nutrient solution) saturated with pure carbon dioxide through the watering and/or feeding system is a rarely used technology, potentially productive when used in plastic-covered greenhouses, especially for growing greens and forcing crops. This technology may be used while growing hydroponic (low-volume) crops, with drop irrigation in open areas or with sprinkling irrigation. Saturation of the water with CO₂ (in concentrations of 0.3 - 1.1 I/I) is done under pressure using special apparatus - saturators (saturation pans).

With both methods, virtually pure CO₂, in 100% concentration, is used for supplementary feeding. When carbon dioxide gas of an appropriate quality (degree of purification) is used, plant distress or poisoning of the service personnel by phytotoxic gases are ruled out completely.

In and of itself, saturation of the water with carbon dioxide (Method B) does not have a significant effect on the growth of plants since it penetrates the leaves poorly when the water is transported through the root system. For example, the portion of CO₂ absorbed through the roots by cucumber cultures comprises not more than 4% of the plant's overall absorption. In fact, it is the carbon dioxide escaping from the nutrient solution (i.e. water saturated with CO₂) that provides practically all of the actual supplementary plant food.

With both these methods of delivering the CO₂, the plants can be fed throughout the growing period - from sprouting to the end of vegetation. Both the system for delivering pure carbon dioxide through perforated polymer sleeves and the system for distributing water saturated with pure carbon dioxide using a stationary CO₂ source, technologically speaking, allow a stable optimum level of CO₂ to be maintained even when greenhouse vents are open in hot weather, if justified by high prices on greenhouse products.

While using Method A, it is possible to dose the carbon dioxide with a high degree of precision and economy throughout the daylight hours: i.e. not allowing its concentration to undergo abrupt changes depending on the changing environmental factors (ambient light, /air/ temperature and humidity conditions), as well as reacting swiftly to changes in the diurnal dynamics of photosynthesis.

If using Method B, it is also possible to dose the CO₂ throughout the daylight hours: it enriches the air in the root zone of the plants smoothly and the losses to the ventilation effect that are endemic in greenhouses are substantially reduced. Unfortunately, it is quite difficult to regulate the content of CO₂ in air, and it is just as difficult to increase its content in greenhouse air over a short period.

With Method A, by changing the suspension height of the perforated polymer sleeves, it is possible to deliver the carbon dioxide at any height in the immediate proximity to the plants - to the root zone, the active leaves zone or the growth points.

With Method B, the CO₂ saturated water is usually delivered through the watering (feeding) system to the root zone.

With both methods of delivering carbon dioxide, it is distributed evenly throughout the greenhouse volume within a certain time period.

Using pure carbon dioxide as supplementary plant food (Method A) has practically no effect on the temperature and humidity conditions within the greenhouse.

Feeding the plants using water saturated with pure carbon dioxide (Method B) affects the temperature and humidity conditions significantly since the feeding is practically concurrent with the watering (see N.V. Pukhalskaya, "Physiology of Carbon Dioxide as Supplementary Plant Food in Greenhouse Vegetable Farming", M., Agroconsult, 2000; "Carbon Dioxide as Supplementary Food for Plants in Raised Beds", Recommendations, M., Rosagropromizdat, 1988; A.D. Tsydendambaev, "Greenhouse Practicum", Microclimate, V., 2001; T.F. Pimenova "Production and Use of Dry Ice and Liquid and Gaseous Carbon Dioxide", M., Light Industry and Food Industry, 1982).

The following may be classified as the main shortcomings of both of the methods described.

In order to implement either one of the two methods of using pure CO₂ as supplementary plant food, substantial capital investments are needed to acquire a carbon dioxide plant with an advanced purification system for carbon dioxide gas before it is fed into the greenhouses and/or a large-capacity stationary reservoir for high-purity liquid carbon dioxide purchased elsewhere.

In order to feed the plants using the system described in Method A, a gasifier is needed with a carbon dioxide delivery unit, a centralized system that will distribute the gas to the greenhouses, and a set of special perforated polymer sleeves. The feeding process must be regulated by high-performance computerized climate control devices receiving data from the greenhouse system of CO₂ sensors and recovered carbon dioxide gas consumption sensors.

In Method B, a ready-made (standard) greenhouse watering/feeding system is used, having several saturators tied into it. The minimum equipment kit also includes CO₂ sensors, pressure sensors and a climate control computer.

With both feeding methods, the mean consumption of pure CO₂ in sunny weather adds up to about 250 kg per hectare of greenhouse area, with vents closed. With vents open this figure can reach from 500 to 1000 kg/ha per light day in windy weather. The generalized data are provided for the spring-summer period for light zone III with the light day duration of about 10 to 14 hours.

Delivering carbon dioxide gas in water (in a nutrient solution) to the root zone of the plants helps reduce this consumption significantly because the non-productive losses from greenhouse ventilation are much less with this type of feeding.

All known methods of feeding plants with pure carbon dioxide gas require CO₂ of superior quality in compliance with GOST 8050 - 85 "Gaseous and Liquid Carbon Dioxide" (volume fraction of CO₂ - at least 99.8%

In spite of the convenience and the relative technical simplicity of the systems running on brought-in liquefied carbon dioxide, their use in greenhouses is quite problematic. This is because superior quality carbon dioxide must be used as plant food, compliant with GOST 8050-85 with a purity rating of 99.8% and containing no extraneous substances detectable by laboratory methods, with the exception of water. This high-purity product, being the only product suitable for feeding greenhouse plants, has a sufficiently high selling price - at least RUB 30/kg. The use of cheaper carbon dioxide guarantees the presence of such contaminants as: fusel oils, hydrogen sulfide and ammonia, ethanolamines, all of which have a very adverse effect on the working capacity of the service personnel and the productivity of the plants.

It will be virtually impossible to check the actual quality of the purchased product (and, later on, to purify it) independently at the greenhouse facility. This is because purifying a substantial quantity of low-grade carbon dioxide on the spot (2 to 5 tons per day) so that it would meet the specified quality requirements is a separate and costly technical task. Thus, when using brought-in carbon dioxide, special attention will have to paid to organizational issues: choosing a certified CO₂ manufacturer, choosing a reliable transport operator, quality control of the CO₂ and additional purification if necessary. Any disruptions in the delivery of the standard product will have a negative effect on the crop yields and profitability of the greenhouse operation.

In addition, both of the above-mentioned technologies are extremely inefficient in their use of carbon dioxide gas as plant food. Most of it is discharged into the outside air.

According to the Kyoto Protocol of 1997, countries that signed this treaty must reduce their greenhouse gas emissions by at least 5% compared to 1990 levels and set up an emissions accounting and control system.

Since the mid-1990s, Europe began to levy a burdensome "climate change tax" on all carbon dioxide emissions. This is why there has been so much more interest in recent years in efficient use technologies of CO₂ in business.

The main objective of the claimed technical solution was to reduce the cost of cultivated products while increasing crop yields.

The technical result was the design-engineering simplification of the watering-and-feeding process using the unlimited reserves of carbon dioxide in the ambient air so that not only is there no pollution by greenhouse gases but, on the contrary, the content of CO₂ in the ambient air is reduced.

The technical result is achieved as follows. In the method of producing a nutrient solution for watering and/or feeding cultivated plants, which includes the dissolution of carbon dioxide in water with formation of chemical bonds using a saturator, **according to the invention** the carbon dioxide is acquired from the atmospheric air by forcing it into the saturator, the saturator's volume pre-filled with water in such a way that an air pocket can form, and air is pumped into the saturator until pressure in the air pocket is higher than the atmospheric pressure and then, by using a pressure relief valve, the air, which has been depleted of CO₂ by partial dissolution in the water, is allowed to escape while compressed air from the compressor is pumped through at the same time so that the previously created pressure in the air pocket is maintained until a nutrient solution with the necessary concentration of dissolved carbon dioxide gas is obtained.

The optimum air pressure to be maintained in the air pocket within the saturator is preferably within the range of 5 to 10 atmospheres.

It is advisable to supply the air into the saturator through the saturator's bottom part under pressure sufficient to force it into the saturator's air pocket through the volume of the water column.

To produce the nutrient solution, it is advisable to use water that is free of contaminants, preferably distilled or filtered through a membrane by reverse osmosis.

As a rule, the saturator's volume is pre-filled with water chilled to a temperature below ambient.

The claimant's study of the prior art, which included a search of patent and scientific-and-technical information sources, and identification of sources containing information about analogues of the claimed invention, demonstrated that no analogues were found characterized by features and connections between them that would be identical to all of the salient features of the claimed technical solution, and the prototype selected from among the analogues (Method B) as the closest analogue by the totality of its features made it possible to identify the totality of essential (with respect to the technical result envisioned by the claimant) distinctive features of the claimed invention presented in the summary.

Therefore, the claimed technical solution complies with the patentability requirement of "novelty" under the current law.

In order to test the claimed technical solution for compliance with the "level of invention" patentability requirement, the claimant performed an additional search of the known technical solutions in order to identify features matching those features of the claimed invention that are different from the prototype, and the results of the search demonstrated that, for a specialist, the claimed invention does not explicitly follow from prior art because in the prior art identified by the claimant no effect of the changes due to the salient features of the claimed invention aimed at achieving the technical result envisioned by the claimant was identified.

In particular, the claimed invention does not provide for the following transformations of the known prototype item:
- addition of a known feature to a known item, attached to it according to known rules, in order to achieve a technical result that has been determined to be affected by precisely these additions;
- replacement of any feature of a known item by another known feature in order to achieve a technical result determined to be affected by precisely this replacement;
- elimination of any feature of a known item while at the same time eliminating a function that stems from the existence of this feature, and achieving a result common for such elimination;
- increasing the number of same-type features in the known item in order to enhance the technical result due to the existence of precisely these features in the item;
- making the known item or a part of it out of a known material in order to achieve a technical result due to the known properties of this material;
- creation of an item that includes known features chosen and interconnected based on known rules while the technical result thus achieved is due only to the known properties of this item's features and connections between them.

Therefore, the claimed invention complies with the "level of invention" patentability requirement under current law.

The invention is illustrated by graphic materials showing one of the possible design options for the functional unit implementing this method.

Further on, the claimed technical solution is described in more detail along with the preferable options for its implementation with references to respective graphic materials, where the following position numbers denote the following functional elements, assemblies and units:
1 - saturator
2 - pump assembly (pumps water into the saturator)
3 - compressor (low-pressure /5-10 atm./ air compressor for forcing carbon dioxide within compressed air into the saturator under pressure)
4 - control valve (water supply system)
5 - control valve (system delivering the ready nutritional solution for irrigation)
6 - cavity (air pocket)
7 - boundary (dividing water and air)
8 - valve (pressure relief, air).

The method is reviewed in relation to the functional unit rendition option for its implementation shown in the graphic materials, which is described below.

The functional unit for producing the nutrient solution for watering and/or feeding of cultured plants includes the following elements connected by main pipelines: saturator 1; pumping unit 2, which has the function of supplying the water through control valve 4 into saturator 1; a means of forcing a gaseous carrier of carbon dioxide into the saturator under pressure, such as low-pressure (preferably 5-10 atm.) air compressor 3, as well as a main (a hydraulic system) for delivering the resulting nutrient solution to the plants being watered, which includes control valve 5.

Atmospheric air is being used as the gaseous carrier of carbon dioxide. Saturator 1 is additionally equipped with a system for venting carbon dioxide-depleted air from air cavity 6 of saturator 1 into the outside air, which includes air pressure relief valve 8. This venting system is set up in a way that allows maintaining the air pressure in air cavity 6 of saturator 1, which is needed for the carbon dioxide to dissolve in water forming chemical bonds. The water-air separation boundary in the saturator is designated as item 7.

The system supplying water into saturator 1 may be equipped with a cooling chamber as well as a water purification unit for removing contaminants (not represented in the graphic materials).

The system pumping the gaseous carrier of carbon dioxide into saturator 1, which includes air compressor 3, is connected to the bottom part of saturator 1 through a main pipe, making sure that atmospheric air can be forced through the water column.

From the physical standpoint, the claimed method involves the following.

The method of producing a nutrient solution for watering/feeding cultivated plants consists of dissolving CO₂ from compressed air in water with formation of chemical bonds inside saturator 1, and then using the resulting volume of nutrient solution from saturator 1 for watering (in particular, through a watering-and-feeding irrigation system). The purified carbon dioxide gas is extracted from atmospheric air by pumping it into saturator 1 with the help of, for instance, compressor 3. The volume of saturator 1 is first (before the air is pumped in) is partially filled with water so that an air pocket - cavity 6 - can form. The air is then pumped into saturator 1 until the pressure in cavity 6 exceeds atmospheric pressure. After that, using pressure relief valve 8, air depleted of CO₂ by partial dissolution in water is emitted from the aforesaid cavity 6 into the atmosphere while compressed air from compressor 3 is pumped through at the same time. Thus the air pressure created previously in cavity 6 is maintained until a nutrient solution with the necessary concentration of dissolved carbon dioxide gas is obtained.

The optimum air pressure to be maintained in cavity 6 of saturator 1 is preferably within the range of 5 to 10 atmospheres.

It is advisable to supply the air into saturator 1 through the bottom part of saturator 1 under pressure sufficient to force it into air cavity 6 of saturator 1 through the volume of the water column.

To produce the nutrient solution, it is advisable to use water that is free of contaminants, preferably distilled or filtered through a membrane by reverse osmosis.

As a rule, the saturator's volume is pre-filled with water chilled to a temperature below ambient.

From the standpoint of environmental protection and occupational health and safety of the service personnel, the use of the claimed method is absolutely safe, both for the environment and for people, as only carbon dioxide obtained from the ambient air is used, which does not contain any admixtures harmful for either pants or humans.

Another commercially valuable function of the claimed method and the equipment (the functional unit) for its implementation can be considered the reduction of the pH of the nutrient solution (irrigation water) after it's been saturated with CO₂, since this effect improves the solubility of fertilizers and increases the assimilability of calcium and magnesium by the plants. In addition, it prevents the buildup of lime scale within hoses and sprinklers of the irrigation system.

When programming a microclimate using a microcomputer (the opening and closing of the vents), it should be remembered that, when additional plant food is provided on a regular basis, a higher temperature may be maintained in the greenhouse since, with increased content of CO₂ in the air, the optimum temperature of photosynthesis in higher plants is shifted upwards (by 1 to 4° C depending on the culture, the type of plant and the lighting level).

The following information is provided in support of the possibility and efficiency of extraction of carbon dioxide gas from atmospheric air.

The solubility of gases in liquids depends on the nature of the gas itself, as well as the temperature, pressure and the ability of the gas to interact with the solvent. Solubility of gases in water also depends on the degree of purification of the water from admixtures.

Table 1 shows solubility ratings for some gases (including carbon dioxide) in water at 18° C and 1 atmosphere pressure of this gas.

Table 2 shows the dependence of solubility of certain gases, at 1 atmosphere, on the temperature (solubility is shown in cm³/l).

The dependence of the solubility of gases on pressure was formulated by Henry in his law: Solubility is directly proportional to the pressure of the gas and the proportionality coefficient, which depends on the nature of the gas.

Gases mostly get into water from the air. The composition of dry atmospheric air is shown in Table 3.

Partial pressures of gases in air are proportional to their fractional content and they will dissolve in water in accordance with Henry's law.

If atmospheric pressure is taken as one, then partial pressures will be represented by fractions. Therefore, volumes of gas dissolved in water will equal the product of solubility multiplied by the fraction of the gas in the atmospheric pressure. Given the differences in solubility, the fractional content of the gases in the total volume of the solvent (water) will be different from their content in air. Since a mol of different gases contains the same number of molecules, the weight of a mol will be equal to the molecular mass and its volume will be 22.4 liters (under normal conditions). Thus, it is possible to determine the masses of gases from air dissolved in one liter of water.

Table 4 shows the masses of gases from air dissolved in one liter of water.

As the above tables show, the percentage of carbon dioxide gas in water is more than an order of magnitude higher than the percentage of carbon dioxide gas in air. This is while the absolute percentage of carbon dioxide gas in a unit volume of water is approximately the same as in a unit volume of air or, if the water has been purified and cooled beforehand, 1.5 to 2 times higher than in air. If the carbon dioxide gas has been dissolved in water at an air pressure, of, for instance, 10 atmospheres, the effect, when watering plants with such a solution, is approximately equal to a 10-fold increase of CO₂ concentration in ambient air. This makes the high effectiveness of feeding plants with CO₂ from a water solution perfectly obvious.

Further development of technologies of using carbon dioxide as supplementary plant food requires more advanced plant monitoring systems to be used, which would enable, among other things, constant monitoring of the real diurnal dynamics of photosynthesis. Additional studies will be needed in order to find optimal concentrations of carbon dioxide for each type of cultivated vegetables and flowers, complete with optimized temperature and humidity conditions and mineral feeding regimen depending on the changes in lighting and the phase of development of the plant.

A deficit of CO₂ is a more serious problem than the deficit of mineral nutrients in the plant food. On the average, a plant synthesizes 94% of its dry mass from water and carbon dioxide, the other 6% being synthesized from mineral fertilizers. Along with the mineral nutrition regimen and the regulation of temperature and humidity, providing CO₂ as a food supplement plays a crucial role in the management of the plant's vegetative and generative balance. Heightened photosynthesis activity increases the pool of assimilates and stimulates the plant's generative development. In this case, a much greater amount of nutrients reaches the root system, which means that the growth of young roots is enhanced, the absorption of mineral nutrients is made more active, and the plants' resistance to adverse environmental factors, including increased air temperature, is improved.

European vegetable growers see supplementing plant food with carbon dioxide gas throughout the plant cultivation period (i.e. from sprouting to the end of vegetation) as a mandatory element of modern intensive growing technology for tomato, cucumber and sweet pepper cultures. By dosing the carbon dioxide gas, it is possible to efficiently reduce the duration of the vegetative phase of plant development thus ensuring an early, and the most valuable, crop of vegetable and flower cultures. With a sufficient supply of mineral nutrients, additional feeding with pure carbon dioxide gas always increases the crop yield of these cultures by 15-40% by increasing the number and weight of the product, particularly with vegetable cultures, as well as speeding up their ripening period by 5-8 days. The increase in the biomass of green cultures with additional CO₂ feeding also increases substantially. For example the crop yield of lettuce increases by 40% and its ripening speeds up by 10-15 days. Feeding flower cultures in greenhouses is also highly efficient since both the quality and the yield of the products are greatly increased, according to some data by 20-30%.

During the fall rotation, feeding by carbon dioxide gas is, in perspective, the main resource for increasing the crop yield of vegetable cultures, primarily tomatoes. Photoculture would be totally out of the question without regular feeding by carbon dioxide gas.

The optimal way to use the claimed environmentally friendly method of producing a nutrient solution and the system for its implementation described above would be in conjunction with environmentally friendly sources of electric power, in particular, wind generators that need to dump the energy produced at nighttime due to its limited consumption. Thus, it would be expedient to use this energy surplus (which is practically not utilized at this time) produced by wind generators, in particular, in the irrigation water purification system used in the claimed method and the functional unit for its implementation.

Thus, the information presented above testifies to compliance, in the implementation of the claimed technical solution, with the following set of conditions:
- a unit embodying the claimed technical solution, may be implemented as part of the technology that manages the process of watering and/or feeding of plants cultivated, for example, by a greenhouse facility.
- for the claimed unit, in the form in which it is represented in the independent claim of the following claims, the feasibility of its implementation using the means and methods described in the application above or known from prior art as of the priority date has been confirmed;
- the unit embodying the claimed technical solution, if implemented, is capable of achieving the technical result envisioned by the claimant.

Consequently, the claimed unit complies with the "industrial applicability" requirement under current law.

**Table 1**

| **Solubility of gases in water at T = 18°C and pressure of 1 atmosphere** | |
|---|---|
| **GAS** | **Solubility in 1 volume of water** |
| Nitrogen | 0.01698 |
| Oxygen | 0.03220 |
| Carbon dioxide | 0.928 |

**Table 2**

| **Solubility of gases in water at 1 atmosphere as a function of temperature (solubility is shown in cm³/l)** | | | | | |
|---|---|---|---|---|---|
| **GAS** | **0°C** | 1**0°C** | 2**0°C** | **30°C** | 4**0°C** |
| Carbon Dioxide (CO₂) | 1730.0 | 1310.0 | 1050.0 | 850.0 | 710.0 |
| Oxygen (O₂) | 48.9 | 38.0 | 31.0 | 26.1 | 23.1 |
| Nitrogen N₂) | 22.3 | 18.3 | 15.1 | 12.8 | 11.0 |

**Table 3**

| **Composition of dry atmospheric air** | | |
|---|---|---|
| **GAS** | **Content in % (by volume)** | **Content in % (by weight)** |
| Nitrogen | 78.09 | 75.7 |
| Oxygen | 20.95 | 23.1 |
| Argon | 0.93 | 1.29 |
| Carbon dioxide | 0.03 | 0.05 |

**Table 4**

| **Masses of gases from air dissolved in one liter of water** | | | |
|---|---|---|---|
| **GAS** | **Volume % in air** | **Volume of gas dissolved in water (ml/l)** | **Volume % of gas in water** |
| Nitrogen | 78.09 | 11.79 | 63.39 |
| Oxygen | 20.95 | 6.49 | 34.91 |
| Carbon dioxide | 0.03 | 0.32 | 1.69 |

**SUMMARY OF INVENTION**

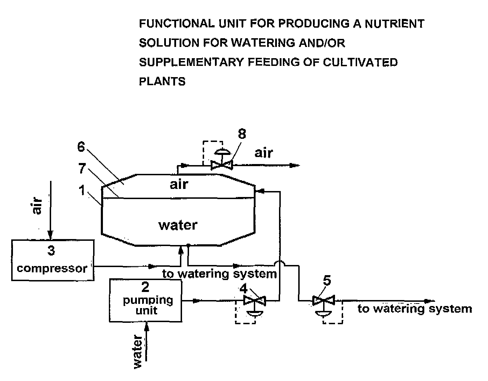

## Claims

1. A method of producing a nutrient solution for watering and/or feeding cultivated plants, which includes the dissolution of carbon dioxide in water with formation of chemical bonds using a saturator, **characterized in that** the carbon dioxide is acquired from the atmospheric air by forcing it into the saturator, the saturator's volume pre-filled with water in such a way that an air pocket can form, and air is pumped into the saturator until pressure in the air pocket is higher than the atmospheric pressure and then, by using a pressure relief valve, the air, which has been depleted of CO₂ by partial dissolution in the water, is allowed to escape while compressed air from the compressor is pumped through at the same time so that the previously created pressure in the air pocket is maintained until a nutrient solution with the necessary concentration of dissolved carbon dioxide gas is obtained.

2. The method according to claim 1, **characterized in that** air pressure is maintained in the saturator's air pocket (cavity), preferably, within the range of 5-10 atmospheres.

3. The method according to claim 1, **characterized in that** air is fed into the saturator through its bottom part under enough pressure to allow it to be pumped into the saturator's air cavity through the volume of the water column.

4. The method according to claim 1, **characterized in that**, in order to obtain the nutrient solution, purified water is used, preferably distilled or filtered through a membrane by reverse osmosis.

5. The method according to claim 1, **characterized in that** the volume of the saturator is pre-filled with water cooled to a temperature below ambient.
